# FASCICULE DE BREVET EUROPEEN

(11) **EP 3 227 128 B1**
(45) Date de publication et mention de la délivrance du brevet: **07.02.2018**
(21) Numéro de dépôt: 15817962.2
(22) Date de dépôt: 03.12.2015
(51) Int. Cl.: B60C 19/00, B29D 30/00, B29D 30/06

(54) **PROCEDE ET DISPOSITIF POUR LA MISE EN PLACE ET LA FIXATION D'UNE BANDE A L'INTERIEUR D'UN PNEUMATIQUE**
VERFAHREN UND VORRICHTUNG ZUR PLATZIERUNG UND BEFESTIGUNG EINES STREIFENS IN EINEM REIFEN
METHOD AND DEVICE FOR PLACING AND ATTACHING A STRIP INSIDE A TIRE

(30) Priorité: 04.12.2014 FR 1461894; 03.06.2015 FR 1555024
(43) Date de publication de la demande: 11.10.2017
(73) Titulaire: Seeb Automation, 42270 Saint-Priest-En Jarez (FR)
(72) Inventeur: BADAROUX, Paul, 42270 Saint Priest En Jarez (FR)
(74) Mandataire: Cabinet Laurent & Charras
(86) Numéro de dépôt international: PCT/FR2015/053307
(87) Numéro de publication internationale: WO 2016/087786

(56) Documents cités:
- EP-A1- 2 239 152
- EP-A2- 1 559 590
- JP-A- 2007 168 243
- JP-A- 2009 160 762
- KR-A- 20100 043 653

## Description

L'invention trouve une application avantageuse pour la mise en place d'une bande destinée à amortir le bruit de roulement d'un pneumatique, notamment pour véhicules automobiles.

Dans le domaine de l'automobile, il est apparu important de pouvoir diminuer les bruits parasites, avec pour objectif de réduire la pollution sonore. C'est ainsi qu'il a été proposé des bandes de conception spécifique destinées à être insérées à l'intérieur d'un pneumatique afin de diminuer, de manière significative, le bruit résultant du roulement dudit pneumatique sur la chaussée, et ce, quel que soit le type de revêtement. Un type de bandes anti-bruit ressort, par exemple, de l'enseignement du document US 2011/0308677. Se pose, par conséquent, un problème pour la mise en place de ces bandes à l'intérieur du pneumatique, en considérant qu'il n'est pas concevable qu'une telle mise en place s'effectue d'une manière manuelle.

En considérant une mise au point relativement récente de telles bandes anti-bruit, les quelques solutions techniques proposées à ce jour, pour la mise en place automatique d'une bande à l'intérieur d'un pneumatique, ne donnent pas totalement satisfaction. Par exemple, selon l'enseignement du document JP 2007168243, la bande est conditionnée en bobine, et est préalablement soumise sur l'une de ses faces à l'application d'un adhésif revêtu d'un film protecteur, qu'il convient d'enlever au fur et à mesure de la mise en place de la bande.

Le problème que se propose de résoudre l'invention est de permettre la mise en place et la fixation, de manière automatique, à l'intérieur d'un pneumatique d'une bande, dont la longueur est sensiblement égale à la circonférence interne dudit pneumatique.

Pour résoudre un tel problème, il a été conçu et mis au point un procédé selon lequel :
- on positionne le pneumatique sur un support en relation avec des moyens de centrage,
- on dépose à l'intérieur du pneumatique un dispositif adhésif,
- on entraîne en rotation le pneumatique,
- on amène la bande à l'intérieur du pneumatique, en exerçant un effort de pression sur ladite bande au fur et à mesure de son amenée à l'intérieur du pneumatique,
- on entraîne ladite bande à une vitesse linéaire supérieure à la vitesse d'entraînement en rotation du pneumatique générant un effet de compression de ladite bande dont la longueur devient inférieure à sa longueur nominale, créant un espace entre les deux extrémités de la bande de sorte, qu'après relâchement, la bande racle le dispositif adhésif qui vient se positionner auxdites extrémités, provoquant de manière concomitante une fixation bout à bout desdites extrémités.

Il ressort de ces caractéristiques que la différence de vitesses d'entraînement en rotation du pneumatique et d'entraînement linéaire de la bande permet un parfait positionnement de la bande à l'intérieur du pneumatique en évitant tout phénomène de glissement et toute formation de plis ou autres défauts, tout en permettant, d'une manière concomitante, la fixation de la bande, y compris bout à bout au niveau de son extrémité

L'invention concerne également un dispositif pour la mise en place et la fixation de la bande à l'intérieur du pneumatique. Selon l'invention, ce dispositif comprend :
- des moyens de positionnement et de centrage du pneumatique sur un support,
- des moyens d'entraînement en rotation de pneumatique,
- des moyens de guidage de la bande en direction de l'intérieur du pneumatique,
- des moyens d'entraînement linéaire de la bande, et de mise en pression de la bande à l'intérieur du pneumatique à une vitesse supérieure à la vitesse d'entraînement en rotation du pneumatique.

Pour résoudre le problème posé d'assurer le positionnement et le centrage du pneumatique, le dispositif met en oeuvre des moyens constitués par des bras autocentrants dont les extrémités libres ou motorisées sont en appui sur la bande de roulement du pneumatique.

Avantageusement, l'entraînement en rotation du pneumatique s'effectue par des galets motorisés contrôlés en position par des codeurs assurant l'absence de glissement du pneumatique par rapport aux galets d'entrainement.

Selon une autre caractéristique, les bras autocentrants sont montés en relation avec le support recevant le pneumatique, lequel support est monté avec capacité de déplacement pour être positionné au droit des moyens de guidage de la bande. Le pneumatique est positionné à plat sur le support, entre les bras autocentrants, ledit support étant assujetti à un organe actionneur pour être déplacé verticalement en hauteur.

Pour résoudre le problème d'amener la bande à l'intérieur du pneumatique, les moyens de guidage de la bande sont constitués par une goulotte inclinée présentant des agencements internes pour maintenir la bande dans sa position de dépose finale en vue de sa préhension par les moyens d'entraînements linéaires,

Dans une forme de réalisation, les moyens d'entraînement linéaire de la bande sont disposés en bout de la goulotte d'acheminement et de guidage.

L'invention est exposée ci-après plus en détail à l'aide des figures des dessins annexés dans lesquels :

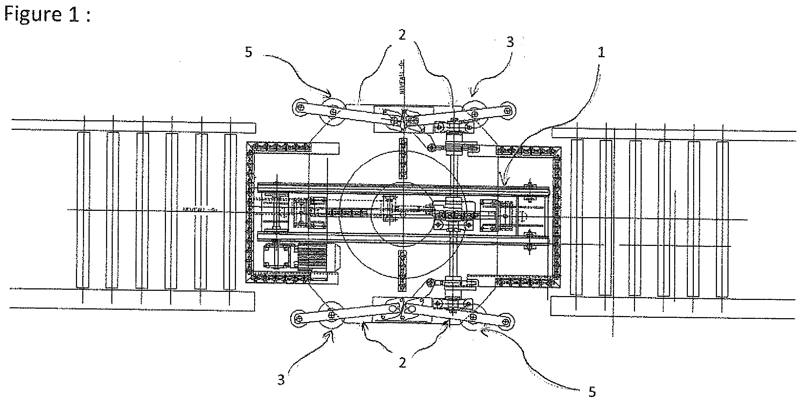

- la figure 1 est une vue en plan du poste de positionnement et centrage du pneumatique,

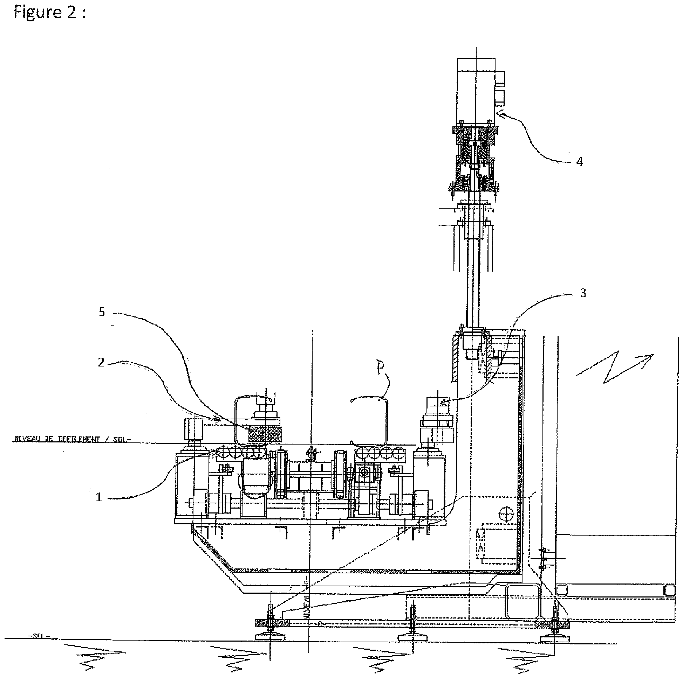

- la figure 2 est une vue de côté correspondant à la figure 1,

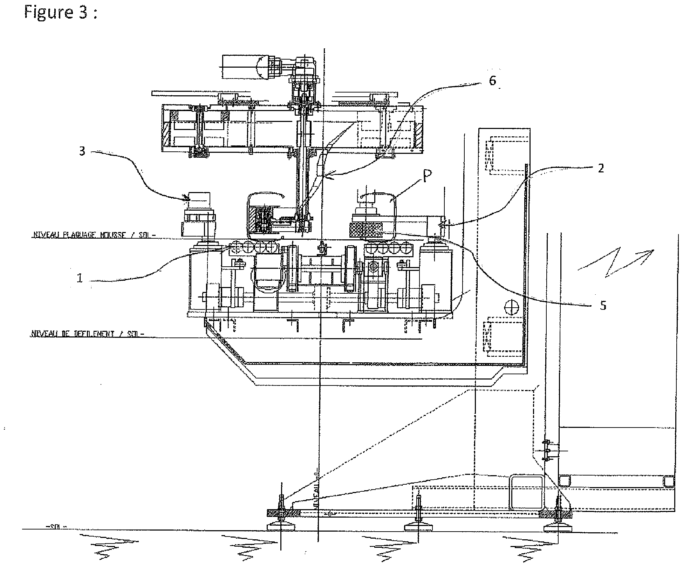

- la figure 3 montre l'élévation du support du pneumatique pour la mise en place de la bande,

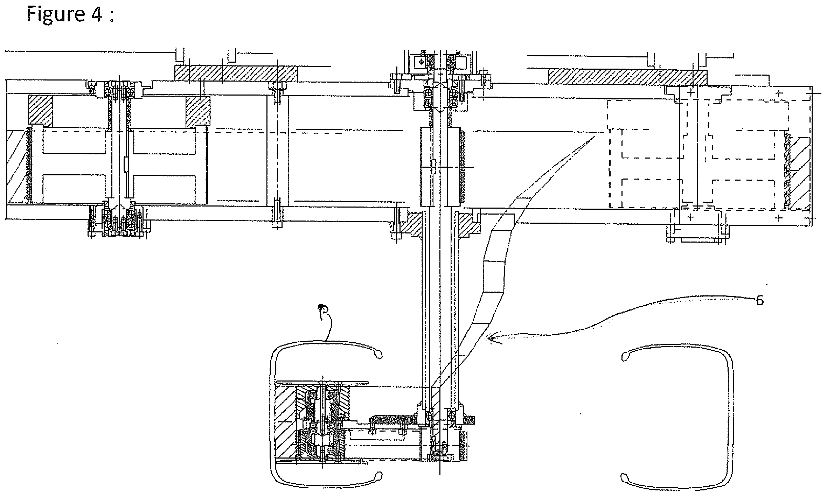

- la figure 4 montre la mise en place de la bande à l'intérieur du pneumatique,
- la figure 5 est une vue en plan en coupe longitudinale à caractère schématique d'un pneumatique équipé intérieurement d'une bande anti-bruit mise en place et fixée selon les caractéristiques de l'invention,
- la figure 6 est, à une échelle plus importante, une vue en coupe transversale considérée selon la ligne AA de la figure 5.
- La figure 7 est une vue partielle, à une échelle plus importante, de la figure 5, avant relâchement de la bande,
- La figure 8 est une vue semblable à la figure 7, après relâchement de la bande.

Comme indiqué, l'invention s'applique à tous types de pneumatiques, quelles que soient ses dimensions, pour tous types de véhicules automobiles, en vue de la mise en place en continu, de manière automatique, d'une bande à l'intérieur du pneumatique, avec pour objectif de diminuer de manière significative les bruits de roulement et autres.

L'invention peut s'appliquer pour la mise en place de bandes, du type de celles définies dans le document US 2011/0308677, sans pour cela exclure d'autres types de bandes de caractéristiques déterminées et adaptées aux dimensions du pneumatique en étant susceptibles d'être réalisées dans différents matériaux.

Dans la suite de la description, le pneumatique est désigné par (P) et la bande, quel que soit son type, par (B).

Comme le montrent les figures des dessins, le dispositif comprend des moyens de positionnement de centrage du pneumatique (P) sur un support (1). Ces moyens sont constitués par des bras autocentrants (2) dont les extrémités libres ou motorisées sont prévues pour venir en appui sur la bande de roulement du pneumatique (P). Avantageusement, les bras autocentrants (2) sont décalés angulairement. Ces bras sont montés sur une partie fixe d'un bâti par exemple, en étant assujettis à un vérin de commande (4) pour leurs déplacements angulaires en direction de la bande de roulement du pneumatique.

Avantageusement, le pneumatique (P) est positionné à plat sur le support (1), entre les bras autocentrants (2). Le support (1) est assujetti à un organe actionneur (4), tel qu'un vérin, pour être déplacé verticalement en hauteur, en vue d'être positionné en relation avec les moyens de guidage et d'entraînement de la bande (B) en direction de l'intérieur du pneumatique, comme il sera indiqué dans la suite de la description.

L'entraînement en rotation du pneumatique (P) s'effectue par des galets motorisés (5), contrôlés en position par des codeurs (3) pour éviter tout risque de glissement du pneumatique par rapport auxdits galets.

Les bandes (B) sont transférées depuis un endroit de stockage, par tous moyens connus et appropriés dans une goulotte de guidage inclinée (6) en vue de les diriger en direction de l'intérieur du pneumatique. Par exemple, la goulotte (6) présente des agencements internes pour maintenir la bande dans sa position de dépose finale en vue de sa préhension par des moyens d'entraînement linéaires. Par exemple, ces moyens d'entraînement linéaires sont disposés en bout de la goulotte d'acheminement et de guidage (6), et peuvent être constitués par des rouleaux motorisés.

Préalablement à la mise en place de cette bande à l'intérieur du pneumatique, on dépose un produit adhésif de tous types connus et appropriés, et on exerce un effort de pression sur la bande au fur et à mesure de son entraînement linéaire à l'intérieur du pneumatique, lui-même entraîné en rotation. La pression de la bande à l'intérieur du pneumatique dépend de la matière constitutive de la bande et du produit adhésif. La pression appliquée est ajustable en fonction de leurs caractéristiques selon des efforts plus ou moins importants.

La mise en place et la fixation de la bande (B) à l'intérieur du pneumatique (P) s'effectue comme suit :
- on positionne un pneumatique sur le support (1), en relation avec les moyens de centrage (2),
- on entraîne en rotation le pneumatique (P),
- on dépose à l'intérieur du pneumatique le dispositif adhésif (C),
- on amène la bande (B) en pression à l'intérieur du pneumatique (P), en entraînant ladite bande (B) à une vitesse linéaire supérieure à la vitesse d'entraînement en rotation du pneumatique (P).

Selon l'invention, cette différence de vitesse entre l'entraînement en rotation du pneumatique (P) et l'entraînement linéaire de la bande (B) est important pour permettre, de manière surprenante et inattendue, la fixation bout à bout des extrémités (B1) et (B2) de la bande (B), après mise en place à l'intérieur du pneumatique. Cette différence de vitesse soumet la bande à un effet de compression, de sorte que la longueur de ladite bande devient inférieure à sa longueur nominale, laquelle longueur nominale est supérieure ou égale au périmètre interne du pneumatique.

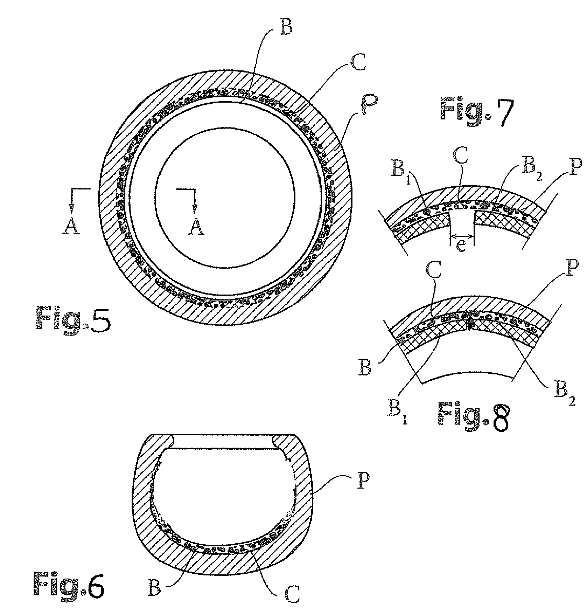

Par exemple, pour un pneumatique dont la longueur du périmètre interne est de X centimètres, la longueur de la bande est comprise entre X et X + 2 centimètres. Les deux extrémités (B1) et (B2) de la bande (B) sont séparées par un espace (e) lors de la mise en place à l'intérieur du pneumatique. Il en résulte qu'après relâchement du phénomène de compression, la bande (B) se relâche et racle le dispositif adhésif (C), qui a tendance naturellement à se positionner aux extrémités de la bande pour permettre, de manière concomitante, une fixation bout à bout desdites extrémités. On renvoie aux figures 7 et 8, qui montrent respectivement la compression de la bande (figure 7), puis son relâchement inhérent à la fixation bout à bout des extrémités de la bande (figure 8).

Comme indiqué, la vitesse d'entraînement en rotation du pneumatique (P) est inférieure à la vitesse d'entraînement linéaire de la bande (B) pour une parfaite mise en place de la bande à l'intérieur du pneumatique, en évitant tous phénomènes de glissement avec pour objectif que la bande soit parfaitement disposée à plat à l'intérieur du pneumatique sans aucun plis ou défauts, et parfaitement fixée, y compris d'une manière bout à bout à ses extrémités. Les différentes données caractéristiques du pneumatique et de la bande sont rentrés dans un programme spécifique afin d'assurer cette parfaite synchronisation entre la vitesse de rotation du pneumatique et la vitesse d'entraînement linéaire de la bande.

Bien évidemment, le dispositif peut être intégré à une chaîne automatisée, intégrant plusieurs postes, à savoir un poste d'amenée des pneumatiques, un poste de nettoyage de l'intérieur du pneumatique, un poste de pré-encollage de l'intérieur du pneumatique, un poste de centrage du pneumatique, un système de découpe de la bande en rouleau, un poste de mise en place de la bande à l'intérieur du pneumatique et de moyens d'évacuation du pneumatique équipé de la bande.

Les avantages ressortent bien de la description.

## Revendications

1. Procédé pour la mise en place et la fixation d'une bande (B) à l'intérieur d'un pneumatique (P), la longueur de la bande étant sensiblement égale à la circonférence interne du pneumatique, procédé selon lequel :
- on positionne le pneumatique (P) sur un support (1) en relation avec des moyens de centrage (2),
- on dépose, à l'intérieur du pneumatique, un dispositif adhésif (C),
- on entraîne en rotation le pneumatique (P),
- on amène la bande (B), que l'on soumet à un effort de pression, à l'intérieur du pneumatique,
- on entraîne ladite bande à une vitesse linéaire supérieure à la vitesse d'entraînement en rotation du pneumatique générant un effet de compression de ladite bande dont la longueur devient inférieure à sa longueur nominale, créant un espace entre les deux extrémités de la bande, de sorte, qu'après relâchement, la bande racle le dispositif adhésif qui vient se repositionner auxdites extrémités provoquant, de manière concomitante, une fixation bout à bout desdites extrémités.

2. Procédé selon la revendication 1, **caractérisé en ce que** l'on exerce l'effort de pression sur la bande, au fur et à mesure de son amenée à l'intérieur du pneumatique.

3. Dispositif pour la mise en place d'une bande (B) à l'intérieur d'un pneumatique (P), la longueur de la bande étant sensiblement égale à la circonférence interne du pneumatique, ledit dispositif comprenant :
- des moyens de positionnement et de centrage (2) du pneumatique (P) sur un support (1),
- des moyens de dépose à l'intérieur du pneumatique d'un dispositif adhésif,
- des moyens (5) d'entraînement en rotation de pneumatique,
- des moyens (6) de guidage de la bande en direction de l'intérieur du pneumatique,
- des moyens d'entraînement linéaire de la bande, et de mise en pression de la bande à l'intérieur du pneumatique, à une vitesse supérieure à la vitesse d'entraînement en rotation du pneumatique.

4. Dispositif selon la revendication 3, **caractérisé en ce qu'**il présente des moyens aptes à exercer un effort de pression sur la bande au fur et à mesure de son amenée à l'intérieur du pneumatique entraîné en rotation.

5. Dispositif selon la revendication 3, **caractérisé en ce que** les moyens de positionnement et de centrage (2) du pneumatique sont constitués par des bras autocentrants dont les extrémités libres ou motorisées sont en appui sur la bande de roulement du pneumatique.

6. Dispositif selon la revendication 3, **caractérisé en ce que** l'entraînement en rotation du pneumatique s'effectue par des galets motorisés (5) montés en combinaison avec des codeurs (3).

7. Dispositif selon la revendication 5, **caractérisé en ce que** les bras autocentrants (2) sont décalés angulairement.

8. Dispositif selon la revendication 5, **caractérisé en ce que** les bras autocentrants (2) sont montés en relation avec le support (1) recevant le pneumatique, lequel support (1) est monté avec capacité de déplacement pour être positionné au droit des moyens de guidage de la bande.

9. Dispositif selon la revendication 8, **caractérisé en ce que** le pneumatique (P) est positionné à plat sur le support (1), entre les bras autocentrants (2), ledit support (1) étant assujetti à un organe actionneur (4) pour être déplacé verticalement en hauteur.

10. Dispositif selon la revendication 3, **caractérisé en ce que** les moyens de guidage de la bande sont constitués par une goulotte inclinée (6) présentant des agencements internes pour maintenir la bande dans sa position de dépose finale en vue de sa préhension par les moyens d'entraînement linéaire.

11. Dispositif selon les revendications 3 et 10, **caractérisé en ce que** les moyens d'entraînement linéaire de la bande sont disposés en bout de la goulotte d'acheminement et de guidage (6).

## Patentansprüche

1. Verfahren zum Anbringen und Befestigen eines Streifens (B) innerhalb eines Reifens (P), wobei die Länge des Streifens im Wesentlichen gleich dem Innenumfang des Reifens ist, wobei:
- der Reifen (P) auf einem Träger (1) in Bezug auf Zentriermittel (2) positioniert wird,
- eine Klebevorrichtung (C) auf die Innenseite des Reifens aufgebracht wird,
- der Reifen (P) in Rotation versetzt wird,
- der Steifen (B), der einer Druckkraft ausgesetzt wird, in das Innere des Reifens geführt wird,
- der Streifen mit einer linearen Geschwindigkeit angetrieben wird, die größer ist als die Antriebsdrehzahl des Reifens, wodurch eine Kompressionswirkung des Streifens erzeugt wird, dessen Länge kleiner als seine Nennlänge wird, wodurch eine Lücke zwischen den beiden Enden des Streifens entsteht, so dass der Streifen nach dem Lösen die Klebevorrichtung, die an den Enden neu positioniert wird, abstreift, was gleichzeitig eine Ende-zu-Ende Befestigung der Enden bewirkt.

2. Verfahren nach Anspruch 1, **dadurch gekennzeichnet, dass** Druckkraft auf den Streifen ausgeübt wird, sobald er in das Innere des Reifens geführt wird.

3. Vorrichtung zum Anbringen eines Streifens (B) in das Innere eines Reifens (P), wobei die Länge des Streifens im Wesentlichen gleich dem Innenumfang des Reifens ist, wobei diese Vorrichtung Folgendes umfasst:
- Mittel zum Positionieren und Zentrieren (2) des Reifens (P) auf einem Träger (1),
- Mittel zum Anbringen einer Klebevorrichtung im Inneren des Reifens,
- Mittel (5) für den Rotationsantrieb des Reifens,
- Mittel (6) zum Führen des Streifens in Richtung des Inneren des Reifens,
- Mittel zum linearen Antrieb des Streifens und zum Ausüben von Druck auf den Streifen im Inneren des Reifens, mit einer Geschwindigkeit, die höher ist als die Antriebsdrehzahl des Reifens.

4. Vorrichtung nach Anspruch 3, **dadurch gekennzeichnet, dass** sie Mittel aufweist, die in der Lage sind, Druck auf den Streifen auszuüben, sobald er in das Innere des in Rotation versetzten Reifens, geführt wird.

5. Vorrichtung nach Anspruch 3, **dadurch gekennzeichnet, dass** die Positionier- und Zentriermittel (2) des Reifens aus selbstzentrierenden Armen bestehen, deren freie oder motorisierte Enden auf der Lauffläche des Reifens abgestützt sind.

6. Vorrichtung nach Anspruch 3, **dadurch gekennzeichnet, dass** der Rotationsantrieb des Reifens über motorisierte Rollen (5) erfolgt, die in Kombination mit Drehgebern (3) montiert sind.

7. Vorrichtung nach Anspruch 5, **dadurch gekennzeichnet, dass** die selbstzentrierenden Arme (2) winkelmäßig versetzt sind.

8. Vorrichtung nach Anspruch 5, **dadurch gekennzeichnet, dass** die selbstzentrierenden Arme (2) in Bezug auf den den Reifen aufnehmenden Träger (1) montiert sind, wobei der Träger (1) mit einer Verlagerungskapazität montiert ist, sodass er rechts von den Führungsmitteln des Streifens positioniert ist.

9. Vorrichtung nach Anspruch 8, **dadurch gekennzeichnet, dass** der Reifen (P) flach auf dem Träger (1), zwischen den selbstzentrierenden Armen (2), positioniert ist, wobei der Träger (1) an einem Stellglied (4) zur vertikalen Höhenverschiebung befestigt ist.

10. Vorrichtung nach Anspruch 3, **dadurch gekennzeichnet, dass** die Führungsmittel des Streifens durch eine geneigte Rinne (6) mit inneren Anordnungen bestehen, um den Streifen in seiner endgültigen Ablageposition zu seinem Erfassen durch Mittel zum linearen Antrieb zu halten.

11. Vorrichtung nach den Ansprüchen 3 und 10, **dadurch gekennzeichnet, dass** die Mittel zum linearen Antrieb des Streifens am Ende der Förder- und Führungsrinne angeordnet sind (6).

## Claims

1. Method for placing and attaching a strip (B) inside a tire (P), the length of the strip being substantially equal to the inner circumference of the tire, according to which method:
- the tire (P) is positioned on a support (1) in relation to centering means (2),
- an adhesive device (C) is arranged inside the tire,
- the tire (P) is driven to rotate,
- the strip (B), to which a pressure force is applied, is moved inside the tire,
- said strip is driven at a linear speed greater than the rotation speed of the tire, thus producing an effect of compressing said strip, the length of which becomes less than the nominal length thereof, thus creating a space between both ends of the strip such that, after release, the strip scrapes the adhesive device, which is repositioned on said ends, thus simultaneously causing said ends to be attached end to end.

2. Method according to claim 1, ***characterized in that*** the pressure force is applied to the strip progressively as it is moved inside the tire.

3. Device for placing a strip (B) inside a tire (P), the length of the strip being substantially equal to the inner circumference of the tire, said device comprising:
- means (2) for positioning and centering the tire (P) on a support (1),
- means for arranging an adhesive device within the tire,
- means (5) for driving the tire to rotate,
- means (6) for guiding the strip in the direction of the inside of the tire,
- means for linearly driving the strip and for applying pressure to the strip inside the tire at a speed greater than the rotation speed of the tire.

4. Device according to claim 3, ***characterized in that*** it has means that can apply a pressure force to the strip progressively as it is moved inside the tire driven in rotation.

5. Device according to claim 3, ***characterized in that*** the means (2) for positioning and centering the tire comprise self-centering arms wherein the free or motorized ends thereof bear against the tread of the tire,

6. Device according to claim 3, ***characterized in that*** the driving in rotation of the tire is performed by motorized rollers (5), that are mounted in combination with encoders (3).

7. Device according to claim 5, ***characterized in that*** the self-centering arms (2) are spaced angularly.

8. Device according to claim 5, ***characterized in that*** the self-centering arms (2) are mounted in relation to the support (1) that receives the tire, which support (1) is mounted with the ability to move in order to be positioned in line with the means for guiding the strip.

9. Device according to claim 8, ***characterized in that*** the tire (P) is positioned flat on the support (1), between the self-centering arms (2), said support (1) being secured to an actuator member (4) in order to be moved vertically in height.

10. Device according to claim 3, ***characterized in that*** the means for guiding the strip comprise an inclined channel (6) having internal arrangements for holding the strip in the final position thereof for the purpose of gripping it by linear drive means.

11. Device according to claims 3 and 10, ***characterized in that*** the linear drive means of the strip are arranged at the end of the conveying and guiding channel (6).
